# EUROPEAN PATENT APPLICATION

(11) **EP 3 479 990 A1**
(43) Date of publication of application: **08.05.2019**
(21) Application number: 17782545.2
(22) Date of filing: 14.04.2017
(51) Int. Cl.: B29C 45/76, B22D 17/32

(54) **DISPLAY OPERATION DEVICE AND MOLDING MACHINE**

(30) Priority: 14.04.2016 JP 2016081109
(71) Applicant: Toyo Machinery & Metal Co., Ltd., Akashi-shi, Hyogo 674-0091 (JP)
(72) Inventor: TARUYA, Koji, Hyogo 674-0091 (JP); HAYASHI, Yu, Hyogo 674-0091 (JP)
(74) Representative: Schön, Christoph
(86) International application number: PCT/JP2017/015396
(87) International publication number: WO 2017/179732

(57) **Abstract**

To provide a display operation device suppressing the erroneous operations of a operation switches and a molding machine comprising the same.
The display operation device 20 comprises a case 70 having a longitudinal front part 71, a display unit 21 longitudinally arranged on the front part of the case 70, multi-function operation switches 41 to 50 laterally arranged in line at a lower edge part 72 of the front part 71 of the case 70, and mode operation switches 51 to 55 longitudinally arranged in line at a side edge part 73 of the front part 71 of the case 70.

## Description

### BACKGROUND OF THE INVENTION

### Field of the Invention

The present invention relates to a display operation device comprised in a molding machine, such as an injection molding machine and a die-casting machine, and a molding machine comprising the display operation device.

### Background Art

Patent Literature 1 (JP2015-98136A) discloses a molding condition setup device as a display operation device comprised in an injection molding machine. The molding condition setup device comprises a display device and a plurality of electric operation keys which are hardware operation switches. The display device is provided with a display unit and a touch panel disposed overlapping the display unit, and an operation/support screen is displayed on the display unit and the operation is provided to the touch panel. The plurality of operation keys include various keys such as cursor keys and enter keys, and are laterally arranged in line at a lower edge of the display unit. In the molding condition setup device, molding conditions of the injection molding machine are set by providing the operation to the touch panel and the operation keys.

### SUMMARY OF INVENTION

### TECHNICAL PROBLEM

In a display operation device comprised in an injection molding machine, such as a molding condition setup device, for example, when an operation related to relatively important function, namely entering an input condition value or resetting all condition values, is made, a responsive press of the operation key with click feeling, not a non-responsive operation like a simple touch to the touch panel tends to be required. Therefore, configuration having many operations related to the important functions is required to have many operation keys, which may be arranged in the lateral and longitudinal directions.

However, when the operation keys are arranged in the lateral and longitudinal directions, the operation keys are arranged close to each other not only in the lateral direction, but the longitudinal direction, and erroneous operations that the operation keys different from the operation keys to be operated are erroneously pressed may be increased.

The present invention has been made in view of the above-described problems, and an object of the present invention is to provide a display operation device which is capable of suppressing increase of erroneous operations and arranging many operation switches, and a molding machine comprising the same.

In order to achieve the object, a display operation device according to an aspect of the present invention is the display operation device comprised in a molding machine, comprising a longitudinal case with a front view, a display unit longitudinally arranged on a front part of the case, and a plurality of operation switches arranged on the front part of the case, wherein some of the plurality of the operation switches are laterally arranged in line at a lower edge part of the front part of the case, and remaining operation switches are longitudinally arranged in line at a side edge part of the front part of the case.

According to the present invention, the plurality of the operation switches are arranged in line along the lower edge part and the side edge part of the front part of the case, and the operation switches do not have to be arranged in the longitudinal and lateral directions. Since the plurality of the operation switches are arranged at an edge part of the case, operations of the operation switches by a thumb can be made with a hand placing on the side surface part or the lower surface part of the case, and erroneous operations are more effectively suppressed by controlling shift of a finger used for the operation. Furthermore, the front part of the case and the display unit have longitudinal shapes, and the display operation device does not become excessive large in the lateral direction if the operation switches are arranged at the side edge part of the front part of the case. Thus configured, it is prevented from to increase in size.

According to the present invention, either some operation switches or the remaining operation switches may be a plurality of multi-function operation switches to which function included in one function group selected from the plurality of the function groups of the molding machine is dynamically allocated. Thus configured, a plurality of functions can be allocated to one operation switch, and the number of the plurality of the operation switches is decreased and the device will be small in size.

According to the present invention, the other of some operation switches or the remaining operation switches may be the plurality of mode operation switches to which function related to an operation mode of the molding machine is allocated. Thus configured, switch of the operation mode of the molding machine or relatively important function related thereto can be allocated to the operation switches. According to the present invention, a common operation switch is further arranged at a point on the front part of the case where a line of some operation switches virtually extended in the lateral direction and a line of the remaining operation switches virtually extended in the longitudinal direction are crossed. Some of the plurality of functions of the molding machine and also functions related to the operation mode of the molding machine may be allocated to the common operation switch. Thus configured, the common operation switch can be used in a similar manner to the multi-function operation switches and the mode operation switches, and the number of the operation switches can be effectively decreased. Furthermore, since the common operation switch is arranged at a cross point of the line of the multi-function operation switches and the line of the mode operation switches, namely at a lower right part or a lower left part of the front part of the case, the operation is relatively facilitated and an operator feels that the common operation switch can be used in a similar manner to the multi-function operation switches and the mode operation switches.

According to the present invention, a rotating shaft unit is provided for rotatably supporting the case around the side edge part serving as a shaft, which is at an opposite side of the side edge part where the remaining operation switches are arranged. The side edge part of the front part of the case where the remaining operation switches are arranged may be provided with a flat part extending in a strip-like shape in the longitudinal direction between the remaining operation switches and the common operation switch. Thus configured, the display operation device may be rotatably provided by the rotating shaft unit, and rotated with a hand placing on the flat part of the case. Therefore, the erroneous operation of the operation switches can be decreased.

In order to achieve the object, a molding machine according to another aspect of the present invention comprises the above-described display operation device and the molding device operating in response to the operation provided to the display operation device.

According to the present invention, the above-described display operation device is comprised and the operation switches do not have to be arranged in the longitudinal and lateral directions.
Since the plurality of the operation switches are arranged at an edge part of the case, operations of the operation switches by a thumb can be made with a hand placing on the side surface or the lower surface of the case, and erroneous operations are more effectively suppressed by controlling shift of a finger used for the operation. Furthermore, the front part of the case and the display unit have longitudinal shapes, and the display operation device does not become excessive large in the lateral direction if the operation switches are arranged at the side edge part of the front part of the case. Thus configured, it is prevented from to increase in size.

### Effect of Invention

According to the present invention, the erroneous operations of the operation switches can be suppressed, and operability can be improved.

### BRIEF DESCRIPTION OF THE DRAWINGS

Fig. 1 is a front view of an injection molding machine according to an embodiment of the present invention;
Fig. 2 is a front view of a display operation device comprised in the injection molding machine in Fig. 1;
Fig. 3 is a functional block diagram schematically illustrating the injection molding machine in Fig. 1;
Fig. 4 schematically illustrates an example that function included in a selected function group is allocated to a plurality of multi-function operation switches in the display operation device in Fig. 2; and
Fig. 5 schematically illustrates a use of a common operation switch of the display operation device in Fig. 2.

### DETAILED DESCRIPTION OF PREFERRED EMBODIMENT

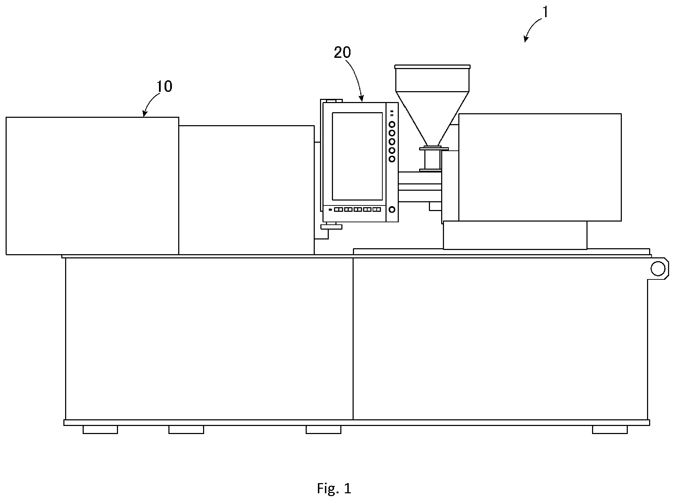

Hereinafter, a description will be made of an injection molding machine in accordance with an embodiment of the present invention with reference to the Figs. 1 to 5.

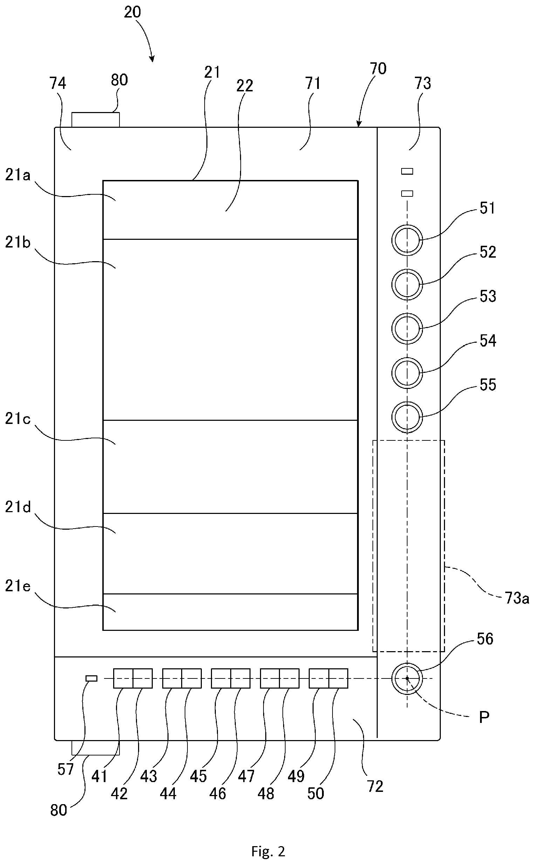

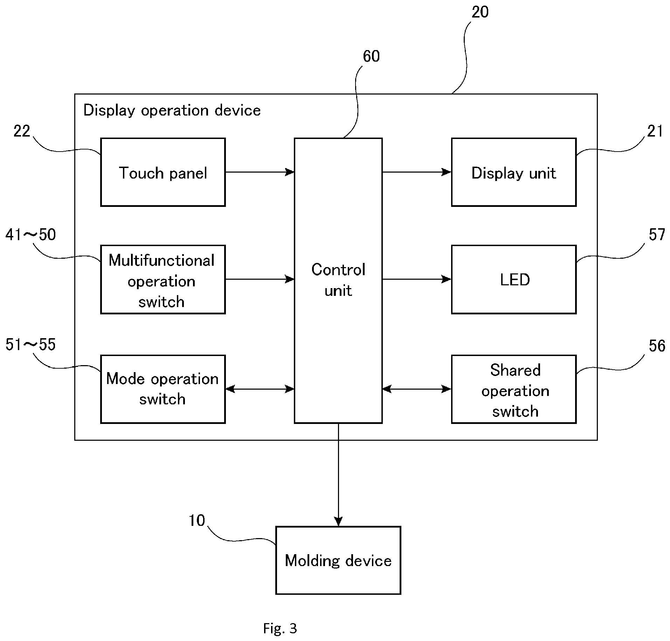

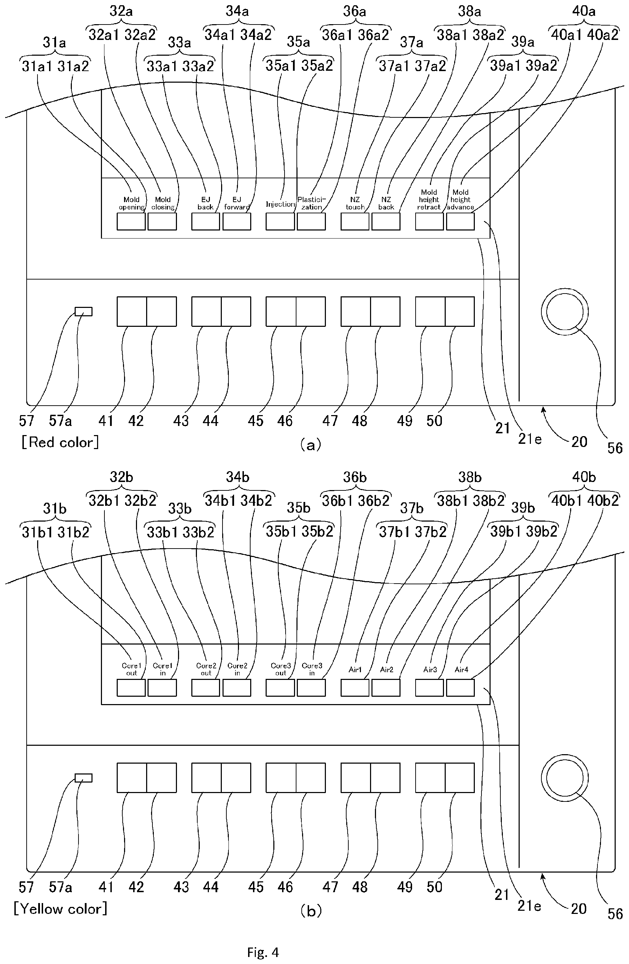

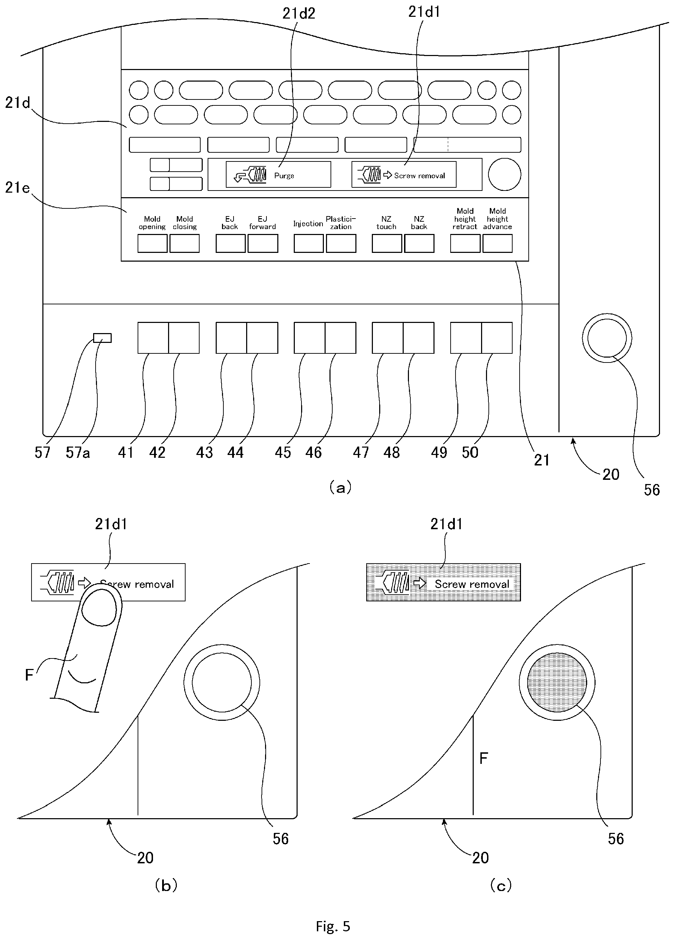

Fig. 1 is a front view of an injection molding machine according to an embodiment of the present invention. Fig. 2 is a front view of a display operation device comprised in the injection molding machine in Fig. 1. Fig. 3 is a functional block diagram schematically illustrating the injection molding machine in Fig. 1. Fig. 4(a) schematically illustrates an example that functions included in a first function group G1 are allocated to a plurality of multi-function operation switches in the display operation device in Fig. 2, and Fig. 4(b) schematically illustrates an example that functions included in a second function group G2 are allocated to a plurality of multi-function operation switches in the display operation device in Fig. 2. Fig. 5 schematically illustrates a use of a common operation switch of the display operation device in Fig. 2.

As shown in Fig. 1, the injection molding machine 1 comprises a molding device 10 and the display operation device 20.

The molding device 10, for example, comprises (1) a heating cylinder, (2) a screw rotatably and forward-backward movably stored in the heating cylinder, (3) a hopper provided at the end side of the heating cylinder and feeding raw material resin into a groove of the screw, (4) a clamping device provided at the tip side of the heating cylinder and provided with a mold, (5) a band heater for heating the heating cylinder, (6) a driving unit for rotating the screw, (7) a driving unit for forwardly-backwardly moving the screw, (8) a driving unit for opening and closing the mold, and ejecting molded products, (9) drivers for driving the driving units included in (1) to (8), (10) a sensor group for detecting various information related to the injection molding, and (11) a controller.

The controller of the molding device 10 is a function unit controlling operations of the overall molding device 10, and comprises a computer. The controller of the molding device 10 performs control of the overall molding steps, such as a plasticization operation, an injection operation, an opening and closing operation, an ejecting operation, and a series of the injection molding operations related to the injection molding, such as an processing/storing operation of a measured vale of the sensors, a determining operation of defective/non-defective products, and a processing/determining operation of an abnormality determining operation. The controller of the molding device 10 is communicably connected to a display operation device 20 which will be described hereinafter, and transmits various display information to the display operation device 20 and receives various function execution command information from the display operation device 20.

As shown in Figs. 2 and 3, the display operation device 20 comprises a display unit 21, a touch panel 22, multi-function operation switches 41 to 50 as some of the operation switches, mode operation switches 51 to 55 as the remaining operation switches, a common operation switch 56, a LED 57, a control unit 60, a case 70 and a rotating shaft unit 80.

The display unit 21 is configured to have a flat panel display such as a liquid crystal display and an organic EL display. The display unit 21 displays various information such as a value, an image and a graph, and images of various operation switches such as a key board, a ten key and operation buttons in response to display control information provided from a control unit 60 which will be described hereinafter. The display unit 21 is longitudinally arranged so as to locate at a center of a front part 71 of a case 70 also longitudinally provided.

As shown in Fig. 2, the display unit 21 has a display field which is divided into five fields, in order from a top, a monitor value display field 21a, a main screen field 21b, a sub-screen field 21c, an operation switch field 21d and a function label display field 21e.

The monitor value display field 21a, for example, displays various detection values related to the injection molding operation which are detected by the sensors of the molding device 10. The main screen field 21b displays various operation screens. The sub-screen field 21c displays screens such as figures of animations for supporting contents of the operation screens displayed on the main screen field 21b. The operation switch field 21d displays screens of the operation switches such as a slide switch and an operation button according to contents displayed on the main screen field 21b or the sub-screen field 21c. The function label display field 21e displays function labels showing functions allocated to the multi-function operation switches 41 to 50 so as to correspond to each multi-function operation switch 41 to 50. These examples are only examples, and the contents displayed on each display field may be another one, and division configuration of the display fields may be variable.

The touch panel 22 is disposed overlapping a display surface of the display unit 21. The touch panel 22 is provided with a touch operation by a user such as an operator. The touch operation includes a tap, namely a touch in a relative short time by an operation tool F such as a finger and a touch operation pen, a long tap, namely a touch in a relative long time by the operation tool F, flicking movement, namely a short and sudden swiping movement in a predetermined direction after touching the operation tool F, and swiping movement, namely to touch and move the operation tool F over the screen in a predetermined direction so as to slide the operation tool F. The control unit 60 which will be described hereinafter functions as a software operation switch by combining the image of the operation switch displayed on the display unit 21 with the touch panel 22.

The multi-function operation switches 41 to 50 are hardware operation switches, and in the present embodiment, pushbutton switches having rectangular shape with a front view are adopted. The hardware operation switch is the operation switch including a mechanical element, and may include the pushbutton switch, a toggle switch and a slide switch. The multi-function operation switches 41 to 50 are laterally arranged in line at a lower edge part 72 of the front part 71 of the case 70. In the present embodiment, there are twenty kinds of functions to be allocated to the multi-function operation switches 41 to 50, and these twenty kinds of functions are allocated to the first function group G1 and the second function group G2. The functions of these twenty kinds are mainly relatively important functions in the operations of driving unit of the molding device 10. The functions included in one function group selected from the first function group G1 and the second function group G2 is dynamically allocated to the multi-function operation switches 41 to 50.

The functions included in the first function group G1 are "mold opening", "mold closing", "EJ back", "EJ forward", "injection", "plasticization", "NZ forward", "NZ back", "mold height retract", and "mold height advance". When the first function group G1 is selected, these functions are allocated to the multi-function operation switches 41 to 50. A red color is correlated with the first function group G1.

The functions included in the second function group G2 are "core 1 out", "core 1 in", "core 2 out", "core 2 in", "core 3 out", "core 3 in", "are 1", "air 2", "air 3", and "air 4". When the second function group G2 is selected, these functions are allocated to the multi-function operation switches 41 to 50. A yellow color is correlated with the second function group G2.

The allocation of these functions is only an example, and the function to be included in each function group is optional. Furthermore, three or more function groups may be available. The number of the multi-function operation switch may be determined according to the configuration. Also, the number of the function included in each function group may be smaller than that of the multi-function operation switch, and in this case, there are the multi-function operation switches to which the functions are not allocated.

The mode operation switches 51 to 55 are hardware operation switches, and in the present embodiment, pushbutton switches having circular shape with a front view are adopted. The mode operation switches 51 to 55 are longitudinally arranged in line at a side edge part 73 of the front part 71 of the case 70. Light emitting elements are built in the mode operation switches 51 to 55, and the light emitting elements are turn on or off in response to lighting control information provided from the control unit 60 which will be described hereinafter. According to the present embodiment, the light emitting elements of the mode operation switches 51 to 55 are lighted on green. Functions for switching modes, in order from "OFF mode", "setup mode", "manual mode", "semi-automatic mode" and "automatic mode" are allocated to the mode operation switches 51 to 55.

The "OFF mode" is for suspending the operation of the molding device 10. When another mode is switched to the OFF mode, the operation of the molding device 10 is suspended. During the OFF mode, setting of the molding condition is made. The "setup mode" is for adjusting each operation from the mold opening to ejecting of the molded parts during one operation cycle, when the mold is changed or the screw is pulled out from the heating cylinder, and so on. In the "setup mode", each operation is made in a low pressure and a low speed. The "manual mode" is for manually carrying out the operations such as mold opening and closing of the molding device 10 by the multi-function operation switches 41 to 50. The "semi-automatic mode" is for suspending the operation cycle each one time. The "automatic mode" is full automatic operation mode for repeatedly producing the molded parts by repeating the operation cycle in a predetermined time.

The common operation switch 56 is the hardware operation switches, and in the present embodiment, the pushbutton switches having circular shape with a front view are adopted. The common operation switch 56 is arranged at a lower right part of the front part 71 of the case 70. Specifically, the common operation switch 56 is arranged at a point P on the front part 71 of the case 70 where a line of the multi-function operation switches 41 to 50 virtually extended in the lateral direction and a line of the mode operation switches 51 to 55 virtually extended in the longitudinal direction are crossed. The light emitting elements are built in the common operation switch 56, and the light emitting elements are turn on or off in response to lighting control information provided from the control unit 60 which will be described hereinafter. According to the present embodiment, the light emitting elements of the common operation switch 56 are lighted on green. The relatively important functions such as the functions related to the operation mode and to the operation of the driving unit of the molding device 10 are allocated to the common operation switch 56.

Regarding the functions allocated to the multi-function operation switches 41 to 50, the mode operation switches 51 to 55 and the common operation switch 56, the relatively less important functions is operated by combining the image of the operation switch such as the ten key or the operation button displayed on the display unit 21 with the touch panel 22. As one example, an input function of the molding condition value is relatively less important, and the input operation of the value is carried out by the software operation switch by combining the ten key displayed on the display unit 21 and the touch panel 22.

LED 57 is arranged in adjacent to the left side of the multi-function operation switch at the left end. The LED 57 comprises an emission unit 57a emittable in red and yellow. The emission unit 57a emits light in red or yellow in response to the lighting control information provided from the control unit 60 which will be described hereinafter.

The control unit 60 is a function unit is a function unit controlling operations of the overall display operation device 20, and comprises CPU, ROM, RAM and a computer having each interface. The control unit 60 performs display control operation of output image to the display unit 21 and operation processing provided to the touch panel 22, the multi-function operation switches 41 to 50, the mode operation switches 51 to 55 and the common operation switch 56. The control unit 60 receives each display information from the controller of the molding device 10, and output the display control information based on the display information to the display unit 21, and transmits the function execution command information provided to the touch panel 22, the multi-function operation switches 41 to 50, the mode operation switches 51 to 55 and the common operation switch 56 to the controller of the molding device 10.

The control unit 60 functions each function unit by executing control programs stored in the ROM by the CPU.

In other words, the control unit 60 displays the function labels showing the function included in the selected function group on the function label display field 21e at the lower part of the display unit 21 so as to correspond to the multi-function operation switches 41 to 50, respectively. The control unit 60 emits light at the emission unit 57a of the LED 57 so as to emit light in the predetermined color corresponding to the selected function group.

Specifically, when the first function group G1 is selected, as shown in Fig. 4(a), the control unit 60 displays the function labels 31a to 40a showing the function included in the first function group G1 on the function label display field 21e of the display unit 21, and the emission unit 57a of the LED 57 emits light in red. The function labels 31a to 40a comprises name part 31a1 to 40a1 and figure part 31a2 to 40a2, respectively. In this case, the control unit 60 allocates the functions included in the first function group G1 to the multi-function operation switches 41 to 50, respectively.

When the second function group G2 is selected, as shown in Fig. 4(b), the control unit 60 displays the function labels 31b to 40b showing the function included in the second function group G2 on the function label display field 21e of the display unit 21, and the emission unit 57a of the LED 57 emits light in yellow. The function labels 31b to 40b comprises name part 31b1 to 40b1 and figure part 31b2 to 40b2, respectively. In this case, the control unit 60 allocates the functions included in the second function group G2 to the multi-function operation switches 41 to 50, respectively.

The control unit 60 alternately switches the function group selected from the first function group G1 and the second function group G2 by right swiping or left swiping the lower part of the touch panel 22, which corresponds to the function label display field 21e.

The case 70 is formed like a box having a longitudinal rectangular shape with a front view, and the control unit 60 is stored inside of the same. A side edge part 73 at a right side of Fig. 2 of the front part 71 of the case 70 is provided with the mode operation switches 51 to 55 and the common operation switch 56 with an interval. Namely, a flat part 73a which is one part of the case 70 and extends in a strip-like shape in the longitudinal direction is arranged between mode operation switches 51 to 55 and the common operation switch 56 without the LED nor switches. The case 70 is made of metallic material or the resin material.

A rotating shaft unit 80 is provided at a side edge part 74 at a left side of Fig. 2 opposite to the side edge part 73 of the case 70. The rotating shaft unit 80 is attached to the molding device 10 and rotatably supports the case 70 around another side edge part 74 as the rotation shaft. The case 70 is rotated around the rotating shaft unit 80 with a hand placing on the flat part 73a of the case 70.

Hereinafter, a description will be made of operation examples when the multi-function operation switches 41 to 50, the mode operation switches 51 to 55 and the common operation switch 56 are used.

### (1) Mold opening by manual operation

The operator presses the mode operation switch 53 to which the function for switching function to "manual mode" is allocated. Thereby, the control units 60 turns on the light emitting elements of the operation switch 53, and switches to the "manual mode". When the first function group G1 is selected and the operator presses the multi-function operation switch 41 to which the function "mold opening" is allocated, the control unit 60 carries out the operation of the mold opening of the molding device 10 while pressing the multi-function operation switch 41.

### (2) Screw pulling out

The operator presses the mode operation switch 52 to which the function for switching function to "setup mode" is allocated. Thereby, the control units 60 turns on the light emitting elements of the operation switch 52, and switches to the "setup mode". At this time, as shown in Fig. 5(a), the control unit 60 displays a screw pulling out operation button 21d1 on the operation switch field 21d of the display unit 21. As shown in Fig. 5(b), the operator taps the software operation switch combining the screw pulling out operation button 21d1 and the touch panel 22 by the operation tool F. Then, as shown in Fig. 5(c), the control unit 60 changes a display color of the screw pulling out operation button 21d1 to a highlight display, and turns on the light emitting elements of the common operation switch 56 and allocates the screw pulling out function to the common operation switch 56. In this state, the operator presses the common operation switch 56. The control unit 60 processes the screw pulling out operation of the mold device 10 while pressing the common operation switch 56. A purge operation button 21d2 is operation in a similar manner as the screw pulling out operation button 21d1. Thus, "screw pulling out function" and "purge function" which is a part of the plurality of the functions of the molding device 10 are allocated to the common operation switch 56.

### (3) "semi-automatic mode" operation

When the operator presses the mode operation switch 54 once to which the function for switching function to "semi-automatic mode" is allocated, the control units 60 turns on the light emitting elements of the operation switch 54. When the mode operation switch 54 is pressed one more time, the control units 60 turns off the light emitting elements of the operation switch 54, and turns on the light emitting element of the common operation switch 56 and switches to the "semi-automatic mode". When the operator presses the common operation switch 56, the control unit 60 turns off the light emitting elements of the common operation switch 56, and turns on the light emitting element of the operation switch 54 and the operation cycle is executed in one cycle by the molding device 10. When the molding device 10 is suspended, the control unit 60 turns off the light emitting elements of the operation switch 54, and turns on the light emitting element of the common operation switch 56 and the operation is returned to a step of pressing the common operation switch 56. Thereafter, the control unit 60 executes the operation cycle in one cycle every one press of the common operation switch 56. Thus, the function related to the "semi-automatic mode" is allocated to the common operation switch 56.

### (4) "full-automatic mode" operation

When the operator presses the mode operation switch 55 once to which the function for switching function to "full-automatic mode" is allocated, the control units 60 turns on the light emitting elements of the operation switch 55. When the mode operation switch 55 is pressed one more time, the control units 60 turns off the light emitting elements of the operation switch 55, and turns on the light emitting element of the common operation switch 56 and switches to the "full-automatic mode". When the operator presses the common operation switch 56, the control unit 60 turns off the light emitting elements of the common operation switch 56, and turns on the light emitting element of the operation switch 55 and the operation cycle is executed in predetermined number of cycle by the molding device 10. When the molding device 10 is suspended, the control unit 60 turns off the light emitting elements of the operation switch 54, and turns on the light emitting element of the operation switch 51 and the operation mode is switched to "OFF mode".

As described above, according to the injection molding machine 1 of the present embodiment, the multi-function operation switches 41 to 50 are arranged in line along the lower edge part 72 of the front part 71 of the case 70, and the mode operation switches 51 to 55 are arranged in line along the side edge part 73 of the front part 71 of the case 70. Thus configured, the operation switches do not have to be arranged in the longitudinal and lateral directions. Furthermore, since the multi-function operation switches 41 to 50 and the mode operation switches 51 to 55 are arranged at the lower edge part 72 and the side edge part 73 of the case 70, operations of the switches by a thumb can be made with a hand placing on the side surface part or the lower surface part of the case 70, and erroneous operations are more effectively suppressed by controlling shift of a finger used for the operation. Furthermore, the front part 71 of the case 70 and the display unit 21 have longitudinal shapes, and the display operation device 20 does not become excessive large in the lateral direction if the mode operation switches 51 to 55 are arranged at the side edge part 73 of the front part 71 of the case 70.

The injection molding machine 1 comprises the plurality of the multi-function operation switches 41 to 50 to which the function included in the selected one function group between the plurality of the function groups G1 and G2 of the is dynamically allocated. Thus configured, a plurality of functions can be allocated to one multi-function operation switch, and the number of the hardware operation switches such as the multi-function operation switches 41 to 50 can be decreased and be small in size.

The plurality of the mode operation switches 51 to 55 are provided, to which the function related to the operation mode of the injection molding machine 1 are allocated. Thus configured, switch of the operation mode of the injection molding machine or relatively important function related thereto can be allocated to the hardware operation switch such as the mode operation switches.

The common operation switch 56 is arranged at a point P on the front part 71 of the case 70 where a line of the multi-function operation switches 41 to 50 virtually extended in the lateral direction and a line of the mode operation switches 51 to 55 virtually extended in the longitudinal direction are crossed. A part of the plurality of the functions of the injection molding machine 1 are allocated to the common operation switch 56, and also the functions related to the operation mode of the injection molding machine are allocated thereto. Thus, the common operation switch 56 can be used like the multi-function operation switches 41 to 50 and the mode operation switches 51 to 55, the number of the hardware operation switches is effectively decreased. Furthermore, since the common operation switch 56 is arranged at a point P where the line of the multi-function operation switches 41 to 50 and the line of the mode operation switches 51 to 55 are crossed, and the arrangement is made at the lower right part or the lower left part of the front part 71 of the case 70, the operation is relatively facilitated and an operator feels that the common operation switch 56 can be used in a similar manner to the multi-function operation switches 41 to 50 and the mode operation switches 51 to 55.

A rotating shaft unit 80 is provided at a side edge part 74 opposite to the side edge part 73 of the case 70. The rotating shaft unit 80 is attached and rotatably supports the case 70 around another side edge part 74 as the rotation shaft. The side edge part 73 of the front part 71 of the case 70 is provided with the flat part 73a extending in a strip-like shape in the longitudinal direction between the mode operation switches 51 to 55 and the common operation switch 56. Thus, the display operation device 20 may be rotatably provided by the rotating shaft unit 80, and rotated with a hand placing on the flat part 73a of the case 70. Therefore, the erroneous operation of the mode operation switches 51 to 55 and the common operation switch 56 can be decreased.

According to the present invention, the erroneous operations of the operation switches can be suppressed, and operability can be improved.

According to the above-described embodiments, the multi-function operation switches 41 to 50 are arranged at the lower edge part 72 of the front part 71 of the case 70, and the mode operation switches 51 to 55 are arranged at the side edge part 73. However, on the contrary, the multi-function operation switches 41 to 50 and the mode operation switches 51 to 55 may be arranged. The common operation switch 56 may be arranged adjacent to the lower side of the mode operation switch 55, namely other than the point P on the front part 71 of the case 70. The present embodiment has a configuration comprising the multi-function operation switches 41 to 50 to which the plurality of the functions are allocated, however, a single function switch to which one function is allocated may be used instead of the multi-function operation switches. The functions other than that related to the operation mode may be allocated to the mode operation switches.

In the above-described embodiments, the injection molding machine which the resin material such as plastics is injected into the mold is disclosed, however the present invention is not limited thereto. Other than the injection molding machine, for example the mold machine for injecting the material of the molded parts into the mold such as a die-casting machine configured to press-feed the metallic material may be applicable. A machine tool other thank the molding machine is also applicable to the present invention.

The embodiments of the present invention is described above, however, the present invention is not limited thereto. Any addition, deletion and modification of the configuration elements, and combination of features of the embodiments are also included in a scope of the present invention.

## Claims

1. A display operation device comprised in a molding machine, comprising
a longitudinal case with a front view,
a display unit longitudinally arranged on a front part of said case, and
a plurality of operation switches arranged on the front part of said case, **characterized in that** some of said plurality of the operation switches are laterally arranged in line at a lower edge part of the front part of said case, and remaining operation switches are longitudinally arranged in line at a side edge part of the front part of said case.

2. The display operation device according to claim 1, **characterized in that** either said some operation switches or said remaining operation switches are a plurality of multi-function operation switches to which function included in one function group selected from the plurality of the function groups of said molding machine is dynamically allocated.

3. The display operation device according to claim 1 or claim 2, **characterized in that** the other of said some operation switches or said remaining operation switches are the plurality of mode operation switches to which function related to an operation mode of said molding machine is allocated.

4. The display operation device according to claim 3, **characterized in that** a common operation switch is further arranged at a point on the front part of said case where a line of said some operation switches virtually extended in the lateral direction and a line of said remaining operation switches virtually extended in the longitudinal direction are crossed, and some of the plurality of functions of said molding machine and also functions related to the operation mode of said molding machine are allocated to said common operation switch.

5. The display operation device according to any one of claims 1 to 4, **characterized in that**
a rotating shaft unit is provided for rotatably supporting said case around the side edge part serving as a shaft, which is at an opposite side of the side edge part where the remaining operation switches are arranged, and the side edge part of the front part of said case where said remaining operation switches are arranged is provided with a flat part extending in a strip-like shape in the longitudinal direction between said remaining operation switches and said common operation switch.

6. The molding machine comprising a display operation device according to any one of claims 1 to 5, and a molding device configured to operate in response to an operation provided to said display operation device.
